# FASCICULE DE BREVET EUROPEEN

(11) **EP 0 685 778 B1**
(45) Date de publication et mention de la délivrance du brevet: **21.07.1999**
(21) Numéro de dépôt: 95401270.4
(22) Date de dépôt: 31.05.1995
(51) Int. Cl.: G05B 19/042

(54) **Procédé de commande d'appareils domotiques groupés**
Verfahren zur Steuerung von Hausgerätegruppen
Method of control of grouped domestic apparatus

(30) Priorité: 31.05.1994 FR 9406635
(43) Date de publication de la demande: 06.12.1995
(73) Titulaire: STMicroelectronics S.A., 94250 Gentilly (FR)
(72) Inventeur: Le van Suu, Maurice Gilbert, F-75116 Paris (FR)
(74) Mandataire: Schmit, Christian Norbert Marie

(56) Documents cités:
- EP-A- 0 361 993
- EP-A- 0 466 152
- EP-A- 0 562 333
- US-A- 4 792 731
- US-A- 5 059 871

## Description

L'invention concerne la commande à distance d'installations électriques à l'intérieur d'une zone limitée, par exemple à l'intérieur d'une maison, d'un bureau ou d'une usine.

Les installations électriques peuvent être commandées par un contrôleur central à condition que soient prévus certains moyens pour transmettre les signaux entre le contrôleur et les autres installations électriques, et que chaque installation électrique contienne des moyens pour décoder le signal et agir en fonction des informations contenues dans celui-ci.

En prenant un système domestique caractéristique, à savoir un système de chauffage, un contrôleur transmet des signaux aux installations de chauffage en superposant des signaux électriques d'une fréquence relativement élevée sur la tension du réseau électrique distribuée sur un réseau électrique. Ces signaux électriques ne peuvent pas parcourir une grande distance, du fait des pertes inhérentes dans les lignes de transmission du réseau à de telles fréquences élevées. Ou bien encore, les signaux peuvent être transmis entre le contrôleur et les autres installations par des liaisons infrarouges, transmissions radio, ou câbles à faibles pertes spécialisés tels que des paires torsadées ou des câbles coaxiaux reliant le contrôleur et les installations ensemble.

Chaque installation a une adresse particulière qui lui est affectée, laquelle est particulière à cette installation. Les signaux transmis doivent contenir l'adresse particulière d'une installation, un code pour quel type d'équipement le signal est adressé (par exemple, le chauffage), et une information d'action nécessaire à partir de ces équipements (par exemple, "chauffer").

Le contrôleur contient un ensemble d'instructions pour chaque type d'installation, qui doit être divisé en ordres simples du type "MARCHE"-"ARRET" avant transmission aux installations individuelles, ou bien des installations plus sophistiquées peuvent décoder et agir à partir d'instructions complètes par exemple "chauffer à 30°C".

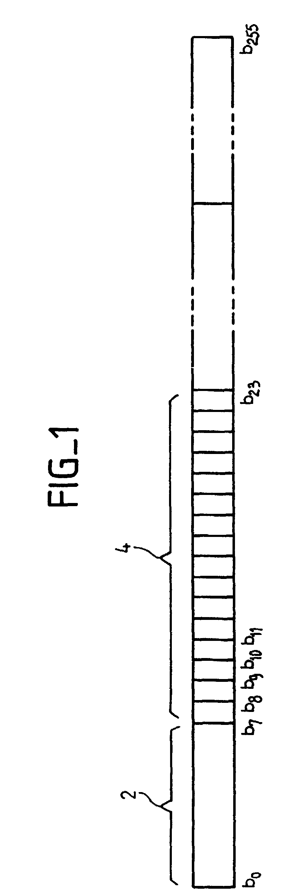

La figure 1 montre le format d'un signal caractéristique utilisé pour une telle commande d'installations électriques. Un premier ensemble 2 de huit bits b₀ à b₇ contient des informations fixes, qui peut être un code de référence du fabricant de l'installation qui transmet le signal, une série 4 de 16 bits b₈ à b₂₃ permettant l'indication du type d'installation qui doit être adressée, les bits restants b₂₄ à b₂₅₅ étant disponibles pour la transmission de l'adresse particulière d'une installation de destination et des instructions à cette installation de destination.

La série 4 de 16 bits b₈ à b₂₃ est caractéristiquement utilisée comme suit. Tous les bits sont à zéro (0) excepté pour un bit qui indique le type d'installation qui est adressé. Le bit b₈=1 peut indiquer une installation de chauffage, le bit b₉=1 peut indiquer un appareil d'éclairage, le bit b₁₀=1 peut indiquer une installation de cuisson, le bit b₁₁=1 peut indiquer un système de jeu, et ainsi de suite.

Un capteur peut être inclus dans le système pour procurer une information de retour en ce qui concerne le fonctionnement des installations, par exemple la température ambiante d'une zone qui est chauffée par un dispositif de chauffage commandé. Le bit b₂₃ est positionné à 1 pour indiquer que la trame a été transmise par un tel capteur en plus du bit b₈, lequel est positionné à 1 pour indiquer que le chauffage est impliqué. Normalement, un seul capteur est utilisé par type d'installation.

Un tel capteur peut être placé à une position distante sans alimentation électrique fournie par le secteur. Un capteur alimenté par batterie peut ainsi être utilisé avec un émetteur radio, un émetteur infrarouge ou un autre émetteur incorporé envoyant des trames de données à un récepteur incorporé dans le contrôleur. En variante, un câble spécial peut être installé, reliant le capteur au contrôleur ou à tout autre installation quelconque. Celui-ci peut servir à la fois comme support de transmission de signal et liaison au réseau électrique.

Normalement, le contrôleur affecte une adresse unique particulière à chaque installation sous sa commande, plus une adresse pour le contrôleur lui-même. Lorsqu'une nouvelle installation doit être ajoutée au système, l'installation est installée et envoie un message d'interrogation au contrôleur. Ce message d'interrogation contient généralement un code 2 de référence du fabricant dans les bits b₀ à b₇, plus les bits 4 d'indication de type, b₈ à b₂₃. Le contrôleur affecte une adresse particulière à la nouvelle installation, et la prend sous sa commande. Un contrôleur peut être configuré pour commander un seul type d'installation, plusieurs types d'installation, ou tous les types d'installation.

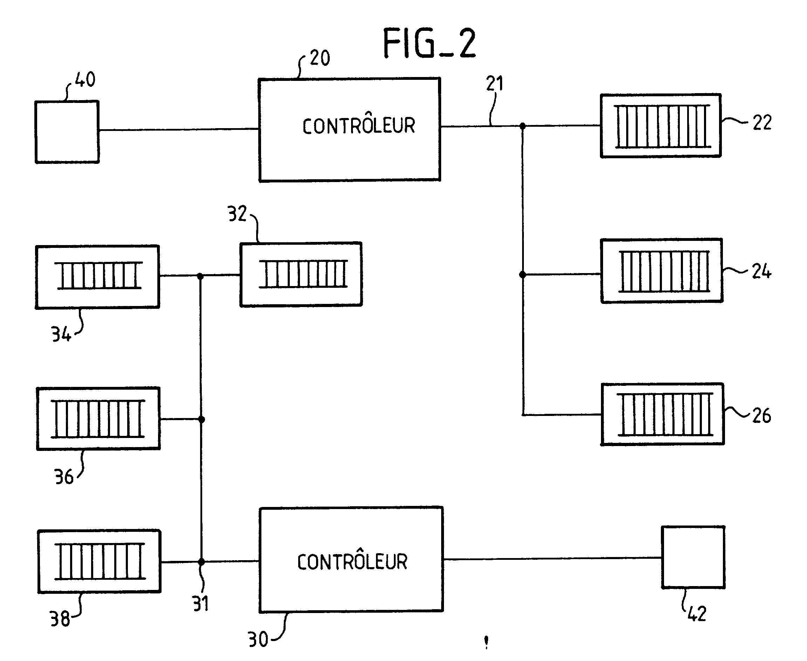

La figure 2 représente deux systèmes simples où un premier contrôleur 20 est relié par l'intermédiaire d'un trajet de données 21 à un premier groupe d'éléments chauffants 22, 24, 26. Un second contrôleur 30 est relié par l'intermédiaire d'un trajet de données 31 à un second groupe d'éléments chauffants 32, 34, 36, 38. Le contrôleur 20 est ainsi utilisé pour commander le premier groupe d'éléments chauffants 22, 24, 26 pour chauffer une première zone, et le second contrôleur 30 est ainsi utilisé pour commander un second ensemble d'éléments chauffants 32, 34, 36, 38 pour chauffer une seconde zone. Le premier contrôleur 20 reçoit des informations de température à partir d'un capteur associé 40. Le second contrôleur 30 reçoit des informations de température à partir d'un capteur associé 42.

Conformément à ces informations et aux instructions mémorisées dans une mémoire d'instruction dans chaque contrôleur, le premier contrôleur 20 envoie des instructions aux éléments chauffants 22, 24, 26 pour chauffer la première zone, ou pour lui permettre de la refroidir. Les décisions sont basées sur les données provenant du seul capteur 40. Une différence quelconque entre des températures ambiantes dans différentes parties de la première zone ne peut être prise en compte par le contrôleur.

La commande est effectuée par le contrôleur 20 émettant des ordres ou instructions ayant le format représenté sur la figure 1, comportant le bit b₈=1 pour indiquer le chauffage, et l'adresse particulière de chaque installation de chauffage dans le message. L'installation de chauffage répond en renvoyant l'ordre d'instruction et en émettant l'adresse particulière du contrôleur.

Ceci peut être répété séparément pour chaque installation, ou un code spécial (par exemple l'adresse particulière "11111") peut être utilisé pour adresser toutes les installations du même type.

Toutefois, si un second groupe d'installations de chauffage 32, 34, 36, 38 demande à être commandé de manière indépendante par rapport au premier groupe, comportant son propre capteur associé 42 pour retour d'information, et comportant son propre ensemble d'instructions ou d'ordres, un second contrôleur 30 avec une mémoire d'instruction doit être utilisé pour le mettre en oeuvre. Ceci peut être le cas, par exemple, pour des niveaux différents d'une tour ou des zones différentes d'une usine. De cette manière, le second groupe d'éléments chauffants 34, 36, 38 et le capteur 42 fonctionnent de manière totalement indépendante, et de la même manière que le premier groupe, comme décrit ci-dessus.

Les contrôleurs 20, 30 reçoivent chacun des informations à partir du capteur associé respectif 40, 42, telles que la température de la zone chauffée par chaque système. Les contrôleurs 20, 30 commandent par suite chacun des éléments chauffants. Dans cette mise en oeuvre, deux contrôleurs indépendants commandent de manière indépendante deux groupes du même type d'installation.

Chaque contrôleur peut commander un ou plusieurs types d'installation, mais les installations d'un seul type sont toutes soumises à des ordres obtenus à partir du même ensemble d'instructions, conformément aux informations de retour obtenues à partir d'un seul capteur. Afin d'avoir la commande indépendante de deux ou plusieurs groupes d'installations du même type, une pluralité de contrôleurs 20, 30 sont nécessaires.

Ce type de système présente un certain nombre d'inconvénients, et parmi ceux-ci on trouve : le fait qu'un seul capteur peut être utilisé pour procurer un retour d'information pour le fonctionnement de la totalité des éléments chauffants du système. Le cadencement et le réglage en température des éléments chauffants sont effectués globalement, de sorte que la totalité des éléments chauffants reliés à un même contrôleur soit mis en marche et arrêtés au même moment. Ils reçoivent tous des ordres obtenus à partir du même ensemble d'instructions, les fluctuations entre des zones différentes, par exemple différentes pièces d'une zone chauffée, ne peuvent être prises en compte par un seul contrôleur. Si la commande indépendante de deux ou plusieurs groupes d'installations du même type est nécessaire, deux ou plusieurs systèmes séparés doivent être utilisés, avec des contrôleurs séparés et les inconvénients de manque de souplesse qui en découlent, de temps et de coût d'installation, et de coût des nombreux contrôleurs dupliquant de nombreuses fonctions communes.

L'invention a pour but de résoudre ce problème de la technique antérieure en proposant un procédé de commande qui permet aux installations de chaque type d'être divisées en un certain nombre de groupes, chacun de ces groupes étant commandé indépendamment de l'état de tous les autres groupes et des types d'installation présents, et la totalité des groupes étant commandé par un seul contrôleur. De multiples capteurs de retour d'information peuvent être prévus, au moins un pour chaque groupe d'installation, afin de permettre une commande et un retour d'information pour chaque groupe d'installation, et de permettre aux variations de température à l'intérieur de la zone chauffée d'être prises en compte.

En résumé, l'invention propose un seul contrôleur qui mémorise dans une mémoire rémanente une liste de relations ou liaisons entre des adresses ou codes de groupes et des adresses particulières d'installations individuelles. Contenu dans la mémoire programme du contrôleur, se trouve un certain nombre d'ensembles d'instructions, un pour chaque groupe d'installations de chaque type. Les instructions donnent naissance à des ordres qui seront seulement envoyés aux installations du groupe concerné, et tous les ensembles d'instructions peuvent être totalement indépendants les uns des autres. L'ensemble d'instructions pour chaque groupe est chaque fois identifié en utilisant un code d'identificateur de groupe.

En prenant l'adresse particulière d'une certaine installation individuelle et en trouvant le code d'identificateur de groupe correspondant, l'ensemble concerné d'instructions peut être trouvé dans la mémoire programme et les ordres envoyés à l'installation individuelle conformément à l'ensemble des instructions relatives à son groupe.

La liste des liaisons peut être totalement mémorisée dans une mémoire dite de liaisons dans le contrôleur, ou peut être partiellement ou totalement mémorisée en mémoire dans les installations.

L'affectation d'une certaine installation à un groupe particulier a lieu dans la mémoire de liaison. Il peut être fait soit à l'installation, en utilisant un clavier numérique incorporé, soit par un clavier connectable temporairement, soit, par des contrôleurs distants, par radio ou par infrarouge. Soit de préférence, le contrôleur peut être configuré, pour accepter toutes les nouvelles installations dans un groupe particulier, juste avant que ces installations ne soient mises en place. Les affectations peuvent être changées par la suite au niveau du contrôleur ou lorsque l'installation doit être modifiée.

L'invention se rapporte donc à un procédé pour commander une pluralité d'installations électriques, d'un ou plusieurs types, connectées à un trajet de données commun. Chaque installation comporte un moyen pour décoder un signal qui lui est transmis, sur ce trajet de données commun, par un seul contrôleur. Le procédé comporte les étapes consistant à :
- émettre, à partir de chaque installation commandée vers le seul contrôleur une trame de données d'identification, contenant un code d'identificateur de type d'installation,
- recevoir la trame de données d'identification par le contrôleur,
- décoder la trame de données d'identification par le contrôleur,
- commander chaque installation par le seul contrôleur conformément à un ensemble d'instructions conservé dans une mémoire d'instruction du seul contrôleur et correspondant au type d'installation identifié par le code d'identificateur du type d'installation,
caractérisé en ce qu'il comprend de plus des étapes consistant à :
- organiser les installations électriques d'un même type en groupes,
- émettre un code d'identificateur de groupe à l'intérieur d'une trame de données, dans chaque direction, entre chaque installation et le seul contrôleur de groupe,
- décoder le code d'identificateur reçu par le seul contrôleur,
- commander l'installation par le seul contrôleur conformément à un sous-ensemble d'instructions correspondant au groupe des installations à l'intérieur du type d'installation, mémorisé à l'intérieur de la mémoire d'instruction du seul contrôleur.

Un aspect particulier de l'invention comporte les étapes consistant à :
- affecter une adresse particulière à une installation par le seul contrôleur,
- enregistrer dans une mémoire de liaison une liaison entre l'adresse particulière de l'installation et un code d'identificateur de groupe correspondant au groupe contenant l'installation.

Un autre aspect de l'invention comporte les étapes consistant à :
- transmettre à partir de chaque installation au seul contrôleur, seulement le code d'identificateur de groupe au moment de l'installation,
- affecter une adresse particulière à l'installation par le seul contrôleur,
- enregistrer dans une mémoire de liaison, la liaison entre l'adresse particulière de l'installation et un code d'identification de groupe.

En outre, le procédé peut comporter la communication avec un ou plusieurs capteurs de retour d'information qui implique les étapes consistant à :
- commander un capteur par le seul contrôleur,
- affecter ce capteur à un groupe d'installations,
- modifier les instructions d'un groupe d'installations correspondant au capteur, conformément à des informations contenues dans une trame de données transmises par le capteur au seul contrôleur.

L'un quelconque de ces aspects peut comporter de plus l'enregistrement, à l'intérieur du contrôleur, de la liaison entre une installation nouvellement installée et un identificateur de groupe, transmis soit par le seul contrôleur à l'installation nouvellement installée, soit par l'installation nouvellement installée elle-même, au moment de l'installation.

Les trames de données peuvent être transmises au moyen d'un signal électrique superposé sur une tension du réseau électrique, avec une fréquence plus élevée que celle de la tension du réseau électrique, ou par transmission radio, ou combinaison de ces deux, ou de tout autre moyen approprié quelconque.

Certains aspects particuliers de l'invention seront décrits ci-dessous, dans lesquels :
la figure 1, déjà montrée, représente une trame de données utilisée dans les systèmes de commande de la technique antérieure;
la figure 2, déjà montrée, représente des systèmes commandés de la technique antérieure;
la figure 3 représente un système commandé des installations électriques conformément à la présente invention;
les figures 4A à 6 représentent des trames de données transmises par diverses installations du système commandé de l'invention;
la figure 7 représente une table de correspondance en mémoire pour utilisation pour commander un système d'installations électriques conformément à l'invention; et
les figures 8 et 9 représentent un schéma d'adressage de mémoire conformément à la table de correspondance en mémoire de la figure 7.

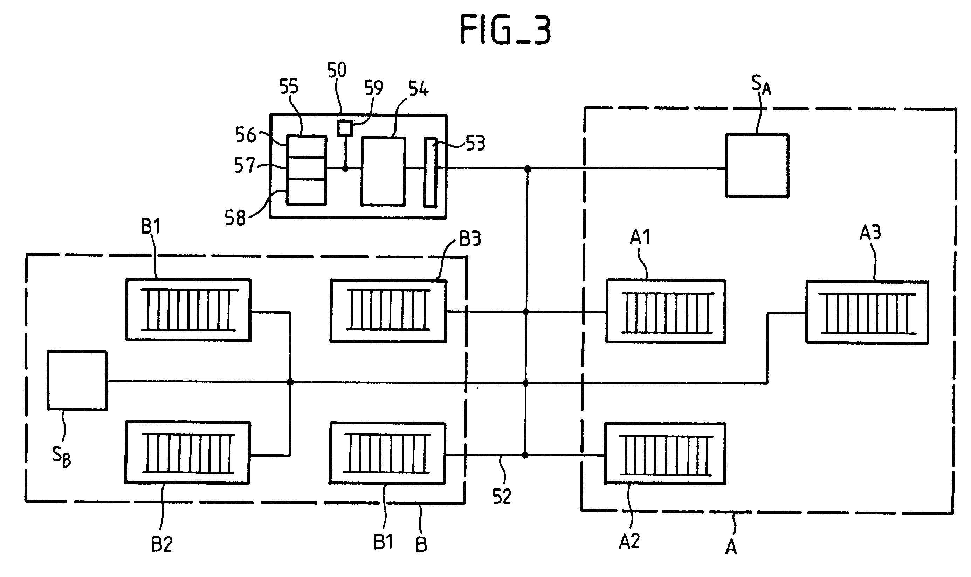

En se référant à la figure 3, l'invention propose qu'un seul contrôleur 50 puisse commander de manière indépendante plusieurs groupes A, B d'installations du même type, dans ce cas des éléments chauffants. Le premier groupe, c'est-à-dire le groupe A, contient des éléments chauffants A1, A2, A3, et un capteur de température ou sonde S_{A}. Le groupe B contient quatre éléments chauffants B1, B2, B3, B4, et un capteur S_{B}. Plus de deux groupes peuvent avoir été définis. Un trajet de données commun 52 relie ensemble la totalité des installations du système. Caractéristiquement, celui-ci est le réseau d'alimentation électrique. Chacun des capteurs S_{A}, S_{B} surveille la température dans une zone chauffée par le groupe respectif d'éléments chauffants. Le contrôleur 50 commande chaque groupe A, B d'éléments chauffants indépendamment de la commande qui est exercée sur l'autre groupe.

Le contrôleur 50 comprend, de manière classique, un circuit de réception 53 relié au trajet de données 52 pour recevoir et transmettre les données provenant ou allant aux installations. Il comprend de plus un circuit logique 54 pour traiter les données conformément aux instructions mémorisées dans une mémoire d'instruction rémanente 55. Le circuit logique 54 ou le circuit de réception 53 peuvent décoder les données. Ceci est fonction de l'implantation choisie. Le circuit logique 54 peut caractéristiquement comporter un microcontrôleur ou un microprocesseur.

En conformité avec l'invention, la mémoire d'instruction 55 comprend des zones 56, 57, 58 pour mémoriser différents ensembles d'instructions pour différents groupes d'installations du même type. Le contrôleur 50 comprend également une mémoire de liaison rémanente 59 pour mémoriser des relations entre les groupes et les installations, et les groupes et les zones de mémoire d'instruction 56, 57, 58. La mémoire programme 55 peut par ailleurs contenir une zone d'instructions commune à toutes les installations d'un même type.

Divers procédés pour affecter des adresses particulières et des groupes particuliers aux installations sont possibles. Parmi celles-ci on trouve :
(i) Lorsqu'une nouvelle installation doit être installée, le contrôleur est configuré pour que toutes les nouvelles installations soient placées dans un groupe particulier, par exemple un groupe A. Dès qu'une nouvelle installation est installée, elle envoie sa trame d'identification au contrôleur. Le contrôleur répond avec une trame contenant l'identificateur pour le groupe A, une adresse particulière, et un ordre de mémorisation destiné à la nouvelle installation procurant à celle-ci son adresse particulière affectée. L'installation mémorise son propre identificateur de groupe et son adresse particulière.
(ii) Lorsqu'une nouvelle installation doit être installée, le contrôleur reçoit l'ordre que toutes les nouvelles installations soient placées dans un groupe particulier, par exemple le groupe A. Dès que la nouvelle installation est mise en place, elle envoie sa trame d'identification au contrôleur. Le contrôleur répond avec une trame contenant une adresse particulière, et un ordre à la nouvelle installation pour que celle-ci ait son adresse particulière affectée. L'installation mémorise son adresse particulière. La relation entre l'adresse particulière et le groupe est seulement mémorisée dans la mémoire du contrôleur.
(iii) Lorsqu'une nouvelle installation doit est mise en place, un groupe est affecté à la nouvelle installation, soit par l'utilisation d'un clavier numérique incorporé ou d'un clavier connectable temporairement à l'installation. De même, des boutons sur le contrôleur peuvent être utilisés pour notifier à la nouvelle installation son groupe affecté. La nouvelle installation comporte le code d'identificateur de groupe concerné dans son message de communication. Le contrôleur note le groupe affecté, attribue une adresse particulière et mémorise la relation dans sa mémoire. Le contrôleur transmet à l'installation une trame contenant l'identificateur de groupe, l'adresse particulière attribuée, et un ordre pour indiquer que l'adresse transmise a été attribuée. L'installation mémorise cette adresse.
(iv) Une installation nouvellement installée transmet sa trame d'identification au contrôleur. Le contrôleur répond avec une adresse particulière attribuée et un ordre pour faire mémoriser cette adresse. L'attribution de groupe est effectuée par l'installation, laquelle ne transmet pas cette information au contrôleur. La liaison entre l'adresse et le groupe est mémorisée seulement dans la mémoire se trouvant dans l'installation.

Les informations qui doivent être contenues dans les trames de données échangées entre le contrôleur et les installations commandées seront fonction de quel procédé ci-dessus est utilisé.

Afin de permettre à de tels systèmes de fonctionner, les changements doivent être faits à la définition des trames de données transmises entre le contrôleur et installations commandées.

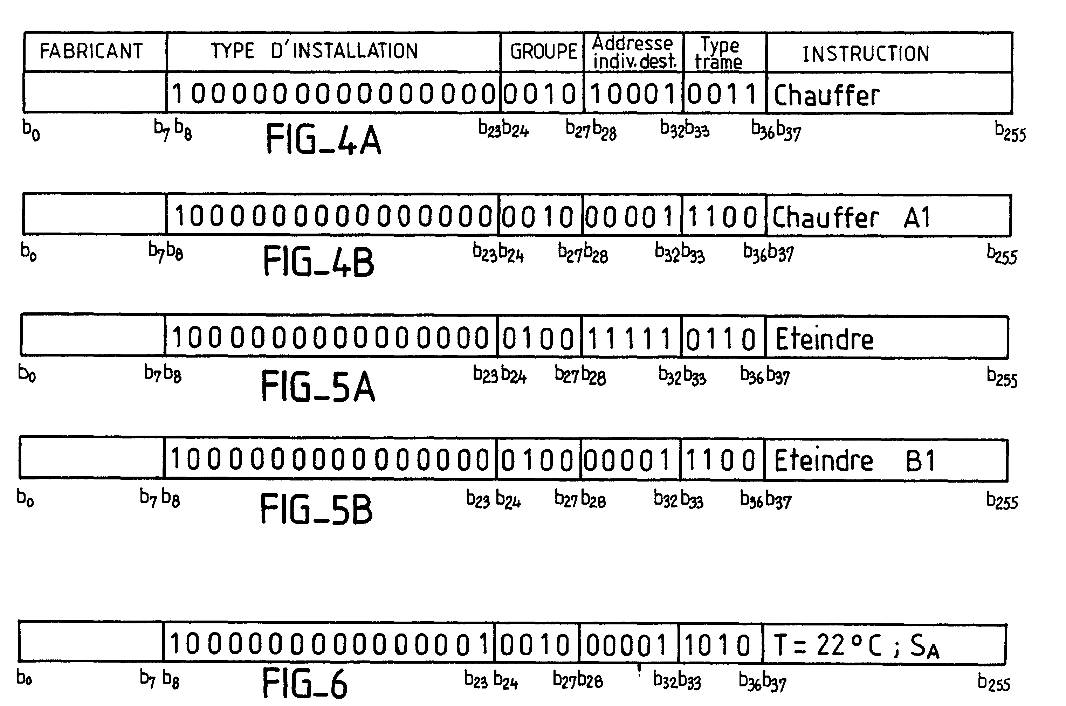

Les figures 4A à 6 montrent des trames de données qui peuvent être utilisées conformément au premier procédé décrit d'attribution d'adresse et de groupe, d'où il résulte que à la fois l'adresse particulière et l'identificateur de groupe particulier sont inclus dans chaque trame.

La figure 4A montre une trame de données transmise par le contrôleur à une installation de chauffage du groupe A. Les bits b₀ à 0₂₃ sont utilisés comme précédemment décrit, ils contiennent le code du fabricant dans les bits b₀ à b₇ "Fabricant", le type d'installation dans les bits b₈ à b₂₃ "Type d'installation". Les bits b₂₄ à b₂₇ sont utilisés pour transmettre un identificateur de groupe "Groupe" du groupe qui doit être commandé. Dans la figure 4A, l'identificateur 0010 doit être utilisé pour indiquer le groupe A. En utilisant un tel identificateur à quatre bits, il est possible de définir seize groupes d'installation du même type. Les bits b₂₈ à b₃₂ contiennent l'adresse particulière "Adresse Indivi. Dest." de l'installation qui doit être adressée, dans ce cas 10001. Une adresse spéciale, par exemple 11111, peut être utilisée pour indiquer tous les éléments du groupe spécifié. Le bit b₈ peut également être positionné à 1 pour indiquer qu'un groupe d'éléments chauffants doit être adressé. Les bits b₃₃ à b₃₆ contiennent un code à quatre bits indiquant un type de trame. Dans ce cas, le code à quatre bits est 0011, et indique une trame d'ordre. Les ordres ou instructions spécifiques sont codées dans ces bits b₃₇ à b₂₅₅, dans ce cas, l'instruction est "chauffer".

La figure 4B montre une trame de données de réponse caractéristique provenant d'un élément chauffant du groupe adressé. Comme précédemment, le bit b₈ peut être positionné à 1 pour indiquer qu'une installation de chauffage est concernée. Les bits b₂₄ à b₂₇ contiennent l'identificateur de groupe A, les bits b₂₈ à b₃₂ contiennent l'adresse de destination, dans ce cas, l'adresse 00001 du contrôleur. Les bits b₂₃ à b₃₆ contiennent un code indiquant que l'ordre a été reçu (un type d'acquittement de trame, avec le code à quatre bits 1100). Les bits b₃₇ à b₂₅₅ répètent l'ordre pour contrôle d'erreur par le contrôleur, par exemple "chauffer". Incluse dans la trame de réponse, se trouve également l'adresse particulière de l'installation émettrice "A1". Les adresses d'émission et de destination sont nécessaires pour une interprétation non ambiguë du message.

La figure 5A montre une trame de données, appelée ordre de diffusion, transmise pour arrêter tous les éléments chauffants du groupe B. Dans ce cas, le bit b₈ peut de nouveau être positionné à 1 pour indiquer que les installations de chauffage sont concernées, mais les bits b₂₄ à b₂₇ contiennent maintenant l'identificateur pour le groupe B, c'est-à-dire "0100". L'adresse "11111" dans les bits d'adresse b₂₈ à b₃₂ signifie "à tous les éléments du groupe". Les bits b₃₃ à b₃₆ contiennent le code de type de trame 0110 pour indiquer un ordre de diffusion. L'ordre dans les bits b₃₇ à b₂₅₅ est simplement "ETEINDRE".

La figure 5B montre la trame de données transmise au contrôleur par un des éléments chauffants du groupe B sur réception de la trame d'instruction représentée sur la figure 5A. L'identificateur de type élément chauffant b₈ et l'adresse de groupe b₂₄ à b₂₇ identifient le message comme partant d'un élément chauffant du groupe B. Les bits b₂₈ à b₃₂ contiennent l'adresse de destination, dans ce cas le contrôleur. Les bits b₃₃ à b₃₆ contiennent le code 1100 pour indiquer comme sur la figure 4B, qu'un ordre a été reçu. Les bits b₃₇ à b₂₅₅ contiennent une répétition de l'ordre de l'instruction pour contrôle d'erreur, et l'adresse particulière de l'installation d'émetteur, dans ce cas B1.

La figure 6 montre une trame de données transmise par un capteur S_{A} qui détecte la température ambiante dans la zone chauffée par les installations de chauffage du groupe A. Le capteur peut émettre chacune de ces données à des intervalles prédéterminés, par exemple une fois par minute, ou lorsque le contrôleur lui demande de le faire, ou conformément à la valeur d'un critère mesuré. Le bit b₂₃ est positionné à 1 pour indiquer que la trame de données provient d'un capteur. Le bit b₈ est positionné à 1 pour indiquer que le capteur surveille les installations de chauffage. Les bits b₂₄ à b₂₇ contiennent l'identificateur de groupe, "0010" pour le groupe A. Les bits b₂₈ à b₃₂ indiquent l'adresse de destination "00001" du contrôleur. Les bits b₃₃ à b₃₆ contiennent le code de type de trame, 1010 indiquant une trame de sortie du capteur. Les bits finaux, bits b₃₇ à b₂₅₅, comportent les données, et l'adresse de l'installation émettrice, dans ce cas capteur "S_{A}", température T = 22°C" Une réponse peut être envoyée à partir du contrôleur au capteur pour confirmer que les données ont été correctement reçues. En outre, le capteur peut transmettre des ordres supplémentaires, par exemple si la température mesurée dépasse un niveau de limite prédéterminé, par exemple 50°C, le capteur peut demander au contrôleur d'arrêter la totalité des éléments chauffants.

En utilisant les informations délivrées par le capteur, le contrôleur peut décider de changer ses ordres au groupe surveillé par le capteur, de manière totalement indépendante des ordres envoyés aux éléments des autres groupes.

Un ensemble de plus d'un capteur par groupe peut être utilisé. Dans un tel cas, les liaisons entre l'ensemble des capteurs des éléments chauffants fonction de ces capteurs doivent également être mémorisées dans la mémoire 59 de liaison du contrôleur. Les éléments chauffants individuels peuvent être commandés conformément à la contre-réaction provenant des capteurs les plus proches, ou d'une valeur moyenne de l'ensemble des capteurs.

Ce procédé consistant à commander différents types d'installations électriques, chacune divisée en un certain nombre de groupes, peut être représenté de manière convenable en mémoire par une table de correspondance d'adresse.

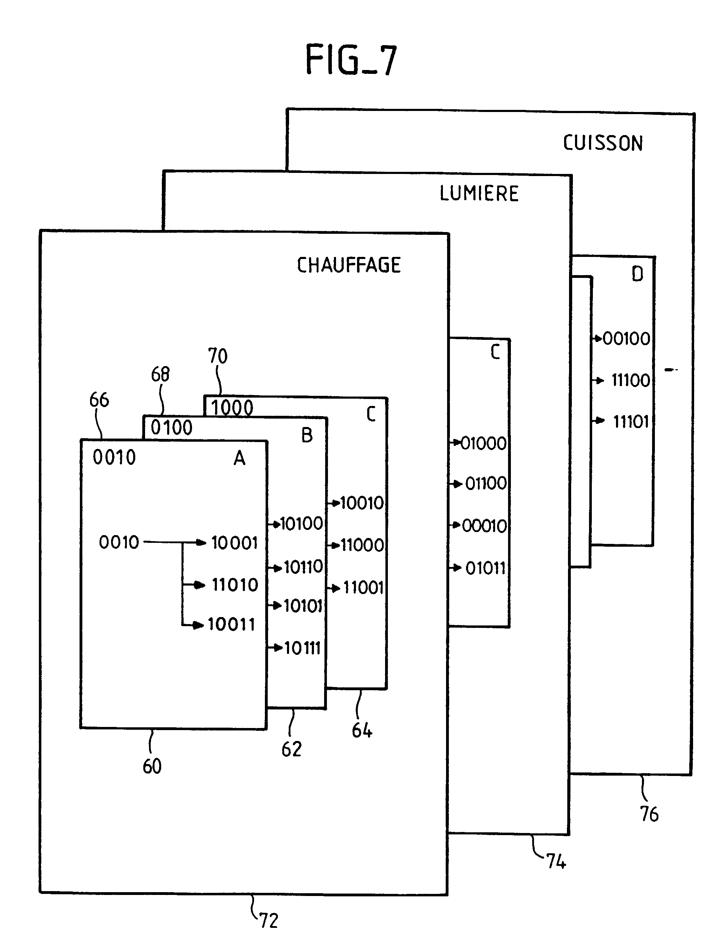

La figure 7 montre une table de correspondance d'adresse caractéristique servant comme une mémoire de liaison 59 à l'intérieur du contrôleur 50 sur la figure 3. Dans le cas décrit, jusqu'à quatre groupes A, B, C, D de chacun des divers types d'installation prévus ont été définis. Chaque type d'installation de chauffage, d'éclairage, de cuisson comporte un ensemble 72, 74, 76 de pages mémoires associé à celui-ci. En prenant le type chauffage comme exemple, chaque groupe A, B, C comporte une page 60, 62, 64 en mémoire à laquelle il est attribué une adresse de page 66, 68, 70, respectivement 0110, 0100, 1000, qui peut être également l'identificateur de groupe respectif. A l'intérieur de chaque page, le contrôleur mémorise l'adresse particulière de chacune des installations appartenant à ce groupe. La page 60 comporte l'adresse des installations A1, 10001, A2, 11010, A3, 1011 tandis que la page 62 comporte les adresses des installations du groupe B, qui sont B1, 10100, B2, 10110, B3, 10101, B4, 10111 et de manière similaire, la page 64 contient les adresses des installations du groupe C, c'est-à-dire C1, 10010, C2, 11000, C3, 11001. Ce système de table de correspondance peut être utilisé de sorte que chaque fois qu'une instruction destinée à un groupe doit être envoyée, le contrôleur puisse prélever celle-ci dans un ensemble d'instructions, chacune devant être envoyée à un élément particulier du groupe.

Les instructions de groupe peuvent de ce fait être transmises individuellement de sorte que des informations provenant de deux capteurs ou plus dans un même groupe puissent être utilisées pour amener des zones plus froides à être chauffées plus que des zones chaudes, à l'intérieur du même groupe. Il est totalement possible qu'un capteur près d'une fenêtre mesure une température de 20°C, tandis qu'un autre capteur près de l'équipement électrique mesure une température de 27°C. Des éléments chauffants individuels peuvent ensuite être commandés pour uniformiser la température dans toute la zone chauffée par un certain groupe en conformité avec une instruction "chauffer à 30°C".

Un autre ensemble 74 de pages placé n'importe où dans la mémoire de liaison contient des pages représentant, de manière identique, des groupes d'installation d'éclairage, et un autre ensemble 76 de pages contient des pages représentant des groupes d'équipement de cuisson. Ceci permet au contrôleur d'adresser les différents types des groupes d'installation individuellement et indépendamment.

Dans la pratique, la table de correspondance en mémoire de la figure 7 peut être disposée dans une zone mémoire par l'utilisation des adresses des emplacements mémoire pour définir les pages.

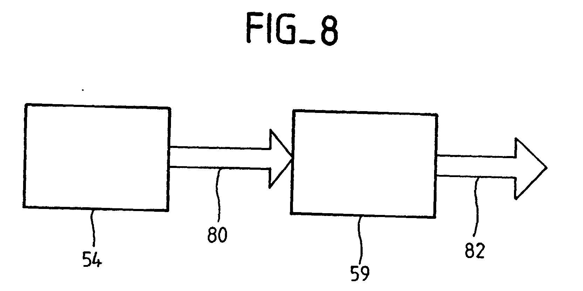

En se référant à la figure 8, une telle disposition peut être réalisée en délivrant des adresses mémoire à partir des circuits logiques 54 à la mémoire de liaison 59 par l'intermédiaire d'un bus d'adresse 80. Ces adresses permettent qu'on accède aux emplacements à l'intérieur de la mémoire de liaison 59 et que leurs contenus puissent apparaître sur le bus de données de sortie 82. Ces contenus peuvent être les adresses particulières des installations. Les adresses sur le bus d'adresse 80 peuvent être telles que les adresses particulières de plusieurs ou de la totalité des éléments d'un groupe particulier d'un type particulier d'installation sont séquentiellement appliqués au bus de sortie 82.

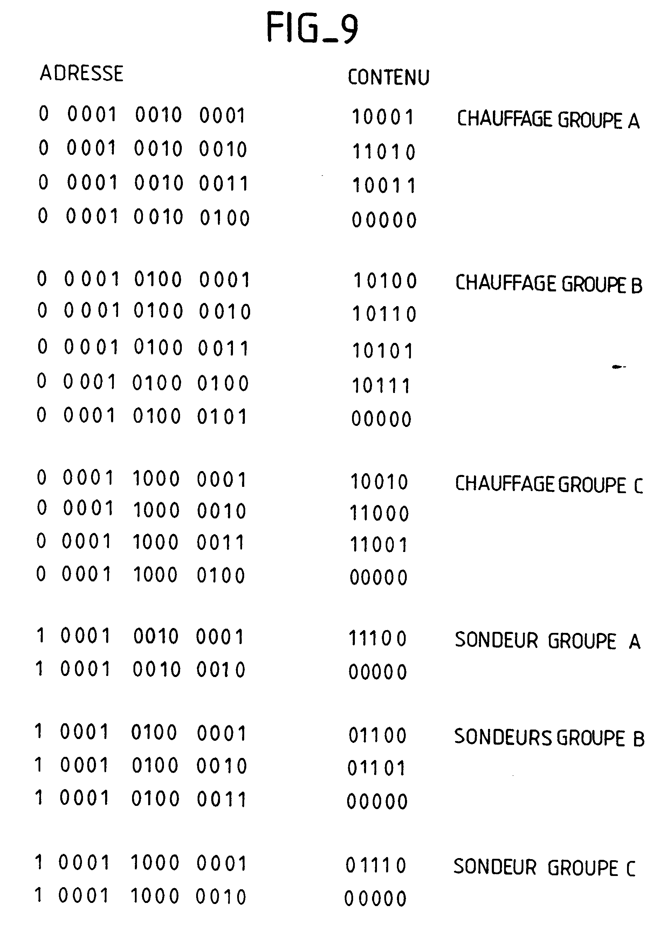

La figure 9 montre un procédé pour organiser la mémoire de liaison afin d'inclure l'ensemble des pages d'éléments chauffants décrites ci-dessus. La colonne gauche contient des adresses à treize bits de mots dans la mémoire, et la colonne droite contient les contenus de chacun de ces mots en mémoire. Le contenu de chacun de ces mots est l'adresse particulière d'une installation du système. En appliquant une adresse, donnée dans la colonne de gauche sur le bus d'adresse 80 de la figure 8, des contenus correspondants - à une adresse particulière d'une installation - sont délivrés sur le bus de sortie 82.

Le premier bit de chaque adresse de mot en mémoire est le bit b₂₃ relatif au type, capteur ou actionneur, de l'installation concernée. Les quatre bits suivants de l'adresse du mot en mémoire sont une interprétation binaire des bits b₈ à b₂₂, donnant le type d'installation. Seulement un de ces quinze bits est toujours actif à tout moment donné. Les quatre bits d'adresse contiennent une valeur *x*, où *x* représente le bit b_{*n*} sous la forme *x* = *n* - 7. Le bit b₈=1 est de ce fait représenté par *x*=1, "0001", et ainsi de suite jusqu'au bit b₂₂=1 représenté par *x*=15, "1111". Les quatre bits suivants sont l'identificateur de groupe. Les quatre bits finaux représentent l'incrément d'adresse pour chaque groupe dans chaque type. Tout mot mémoire quelconque préenregistré qui ne correspond pas à une adresse particulière d'une installation contient "0000". Les contenus des mots mémoires identifiés un par un type d'installation et par un code identificateur de groupe sont des adresses particulières des installations dans ce groupe.

Par exemple, afin d'adresser tous les éléments chauffants du groupe A, le contrôleur place tout d'abord l'adresse 0 0001 0010 0001 sur le bus d'adresse 80, et l'adresse particulière du premier élément du groupe apparaîtra sur le bus de données 82. Le contrôleur incrémente l'adresse appliquée au bus d'adresse 80 à 0 0001 0010 0010 afin d'obtenir l'adresse particulière de l'élément suivant du groupe A. Ceci continue jusqu'à ce qu'une adresse particulière de 00000 soit renvoyée, indiquant qu'aucune installation supplémentaire n'est affectée à ce groupe.

Une table de correspondance en mémoire pour des installations d'éclairage devra avoir les cinq premiers bits de l'adresse du mot en mémoire "0 0010" pour les installations d'éclairage elles-même, plus "1 0010" pour les capteurs de retour d'information, qui peuvent être des détecteurs de rupture de filament.

En utilisant cette organisation de mémoire, la possibilité de définir jusqu'à 16 groupes est préservée, et la possibilité d'installer de nombreux capteurs par groupe est comprise. Le nombre d'installations possibles par groupe est limité par la longueur de l'adresse. Dans cet exemple, avec 4 bits, 16 installations par groupe peuvent être effectuées. Avec un bit d'adressage supplémentaire disponible, jusqu'à 32 installations par groupe sont possibles.

D'autres procédés pour organiser la mémoire sont possibles, tels qu'en adressant la mémoire en utilisant l'adressage annexé, qui est effectué à partir d'une adresse de départ fixe et en ajoutant une certaine partie ou la totalité des contenus d'une trame de données pour adresser l'emplacement mémoire requis, lequel contiendra l'adresse particulière de l'installation concernée.

Les avantages de la présente invention seront nettement appréciés par référence aux exemples suivants.

On suppose qu'un système de chauffage doit être configuré dans une tour, avec les installations sur chaque niveau appartenant à des groupes différents.

Les lignes de réseau électrique peuvent de préférence être utilisées pour la transmission des données, et de ce fait aucune installation de câblage supplémentaire n'est nécessaire. Un seul contrôleur est placé dans une pièce d'entretien à l'intérieur du bâtiment. Avant l'installation des éléments chauffants, disons, au 6ème niveau, le contrôleur est manuellement mis en oeuvre, par exemple en utilisant un clavier numérique incorporé, pour que tous les nouveaux éléments chauffants soient installés dans le groupe A. Au fur et à mesure que les éléments chauffants sont installés, chacun envoie sa trame d'identification, comme décrit ci-dessus, au contrôleur. Les trames d'identification peuvent être identifiées en utilisant un code particulier dans les bits b₃₃ à b₃₆, c'est-à-dire les bits de code du type de trame. L'installation d'un ou plusieurs capteurs s'effectue de manière similaire. Sur réception de chaque trame d'identification, le contrôleur affecte une adresse à l'installation qui émet la trame d'identification en utilisant un ordre spécial et un code de type de trame dans les bits b₃₃ à b₂₅₅ d'une trame, et la liaison entre l'adresse donnée et un groupe A est mémorisée dans la mémoire du contrôleur en utilisant de nouveau un code de type de trame approprié. L'une des instructions requises peut être transmise au contrôleur par tout dispositif de commande distant approprié, par exemple, un émetteur radio ou à infrarouge.

Lorsque la totalité des éléments chauffants au 6ème niveau ont été installés, le contrôleur est de nouveau configuré pour que toutes les nouvelles installations suivantes diverses soient placées dans le groupe B. L'installation du groupe suivant d'éléments chauffants, disons au 7ème niveau, peut maintenant commencer. L'installation, l'affection de l'adresse et la mémorisation de la liaison entre les adresses et les groupes sont effectuées de la manière décrite ci-dessus. Des procédures similaires peuvent être suivies pour d'autres niveaux et pour d'autres groupes.

Le contrôleur est ainsi programmé avec un ensemble d'instructions qui doit être exécuté pour chaque groupe d'installations.

Les ordres obtenus à partir de ces instructions sont transmis à chaque élément du groupe concerné en utilisant les pages en mémoire pour identifier les adresses particulières des éléments du groupe, comme décrit précédemment. Les ordres pour le groupe A sont ensuite transmis individuellement aux adresses d'installation 10001, 11010, 1011. Le signal de contre-réaction provenant du capteur peut contenir soit l'adresse particulière du capteur et l'identificateur de groupe, soit seulement l'identificateur de groupe si un seul capteur par groupe est utilisé. L'utilisation de l'adresse particulière est nécessaire si plus d'un capteur par groupe est utilisé.

Avec ce procédé, il n'est pas nécessaire de transmettre l'identificateur de groupe entre le contrôleur et les installations. Les installations individuelles peuvent être passées d'un groupe à un autre au niveau du contrôleur, sans avoir à visiter l'installation elle-même. Ceci est utile, dans des applications telles que des immeubles ou des petits appartements avec des systèmes de chauffage communs, où l'accès aux éléments de chauffage individuels pourrait être difficile.

Un tel système permet jusqu'à 16 groupes de chaque type d'installation (en utilisant un identificateur de groupe à quatre bits), et un total de jusqu'à 30 installations de chaque type, en utilisant une adresse particulière à cinq bits (les adresses 00000 et 11111 étant utilisées pour d'autres fonctions, comme décrit précédemment). Des adresses plus longues peuvent être utilisées pour commander un nombre plus important d'installations.

En variante, le contrôleur peut délivrer à chaque nouvelle installation son adresse particulière et son identificateur de groupe. Celles-ci sont ensuite mémorisées à la fois dans le contrôleur et dans l'installation commandée. Bien que ceci diminue la souplesse du système, ceci permet à chacun des seize groupes de chaque type d'installation de contenir jusqu'à 30 éléments. Les codes appropriés d'identification de type seront inclus dans chaque trame pour permettre à chaque trame d'être correctement interprétée.

Un procédé en variante implique l'affectation d'un groupe à chaque installation au moyen d'un clavier connectable temporairement, ou d'un clavier numérique incorporé à l'installation, en liaison avec un contrôleur de faible dimension et un programme mémorisé dans une mémoire dans l'installation. Le clavier numérique ou clavier connectable temporairement peut être remplacé par tout dispositif de commande à distance approprié quelconque, utilisant par exemple des ondes infrarouges ou ondes radio pour transmettre les informations à l'installation.

Dans ce cas, il n'est pas nécessaire de visiter le contrôleur. Une fois que l'installation nouvellement installé a été affectée à un groupe, elle envoie son signal d'interrogation au contrôleur, comportant l'identificateur de groupe à quatre bits. Le contrôleur affecte ensuite à celle-ci une adresse individuelle.

Le contrôleur mémorise la liaison entre l'adresse individuelle et le groupe dans sa mémoire.

Soit des groupes entiers, soit des installations individuelles peuvent être adressés en transmettant une instruction comportant l'identificateur de groupe et soit l'adresse particulière de l'installation, soit le code en indiquant que toutes les installations de groupe devraient obéir à l'instruction, en plus du code du type approprié, comme décrit précédemment.

Dans le but d'affecter des adresses particulières, les capteurs peuvent émettre des trames de données contenant seulement leur identificateur de groupe, ou leur identificateur de groupe plus leur adresse individuelle, ou même seulement leur adresse individuelle, fonction des dispositions de mémoire et du procédé d'affection d'adresse utilisé.

Cet aspect de l'invention permet également jusqu'à 16 groupes pour chaque type de dispositif, et jusqu'à 30 installations dans chacun des ces groupes. L'affectation des groupes peut être sélectionnée et changée à l'installation, permettant par exemple, aux résidents d'une tour le choix entre 16 programmes de chauffage.

Un troisième procédé d'installation implique l'affectation d'un groupe à chaque installation et le maintien de la liaison entre les groupes et l'adresse individuelle à l'intérieur de chaque installation. L'affectation peut être effectuée en utilisant un clavier numérique incorporé, un clavier connectable temporairement ou un dispositif de commande à distance utilisant un support de transmission approprié, tel que les ondes infrarouges ou radio. Le contrôleur peut transmettre systématiquement un signal de "guidage" à une adresse particulière, auquel l'installation adressée répond avec son groupe, et le contrôleur émet ensuite les instructions appropriées. Ce procédé limite également le nombre total d'installations de tout type quelconque à 30. Il permet également que l'affectation d'une installation particulière puisse être modifiée sans visiter le contrôleur. Il est utile, de manière similaire, dans des situations où l'utilisateur est autorisé à changer des affectations de groupe, comme dans l'exemple précédent. De nouveau, le code du type de trame approprié devra être utilisé pour permettre une interprétation sans ambiguïté de chaque trame.

Conformément à chacun des aspects de l'invention décrits, chaque type d'installation peut être divisé en un certain nombre de groupes, chacun soumis à un ensemble d'instructions mémorisées dans la mémoire du contrôleur, ces instructions étant indépendantes pour chaque groupe d'installation et chaque type d'installation.

Ceci permet que la commande puisse être effectuée à partir d'un contrôleur central conformément aux exigences différentes des différents groupes d'installation.

La discussion a été limitée, à titre d'exemple, à des applications de chauffage mais le même procédé est applicable, et peut être commandé par un contrôleur commun avec, d'autres équipements automatisés domestiques, tels que l'éclairage des différents niveaux ou zones d'un bâtiment, en plus des fonctions de gestion du bâtiment sur une grande échelle, telles que la cuisson pour la production d'aliments à grande échelle demandant différentes conditions, et même une machinerie d'éclairage industriel qui comporte des circuits de décodage et d'interface appropriés.

Des techniques d'adressage de mémoire différentes, et des procédés différents pour affecter des adresses particulières, ainsi que des longueurs différentes des adresses particulières, peuvent être utilisés pour augmenter soit le nombre de groupes qui peuvent être définis pour chaque type d'installation, soit le nombre total d'installations possibles, soit les deux.

Des économies en coût d'installation sont faites sur la technique antérieure, en plus de la facilité de commande à partir d'un contrôleur central, et une plus grande souplesse de la commande qui peut être exercée sur les installations individuelles est assurée.

Bien que l'invention ait été décrite par référence à des modes de réalisation spécifiques, de nombreuses variantes et modes de réalisation de l'invention seront apparents à l'homme de l'art. En particulier, un contrôleur comme décrit peut être utilisé pour commander tout appareil quelconque, non nécessairement domestique ou d'applications d'éclairage industriel. Le transfert des données entre le contrôleur et les installations commandées peut avoir lieu sur tout support quelconque. Les groupes d'installation ne contiennent pas nécessairement plus d'un élément.

## Revendications

1. Procédé pour commander une pluralité d'installations électriques (A1 à A3, B1 à B4) d'un ou plusieurs types connectés à un trajet de données commun (52), chacune comportant un moyen pour décoder un signal transmis sur ce trajet de données commun à celles-ci par un seul contrôleur (50), comprenant les étapes consistant à :
- émettre, à partir de chaque installation commandée vers le seul contrôleur (50), une trame de données d'identification, contenant un code d'identificateur de type d'installation (4),
- recevoir la trame de données d'identification dans le contrôleur (50),
- décoder la trame de données d'identification dans le contrôleur (50),
- commander l'installation (A1 à A3, B1 à B4) par le seul contrôleur conformément à un ensemble d'instructions (56, 57, 58) conservées dans une mémoire d'instruction (55) du seul contrôleur (50) et correspondant au type d'installation identifié par le code d'identificateur de type d'installation (4),
caractérisé en ce que le procédé comprend de plus les étapes consistant à :
- organiser les installations électriques d'un même type en groupes (A, B, C, D),
- émettre un code d'identificateur de groupe (b₂₄ à b₂₇) à l'intérieur d'une trame de données entre chaque installation et le seul contrôleur (50),
- décoder (53, 54) le code d'identificateur de groupe reçu dans le seul contrôleur (50),
- commander l'installation par le seul contrôleur (50) conformément à un sous-ensemble d'instructions (56, 57, 58) correspondant au groupe (A, B, C, D) d'installations mémorisées dans la mémoire d'instruction (55) du seul contrôleur (50).

2. Procédé selon la revendication 1, caractérisé en ce qu'il comprend de plus les étapes consistant à :
- affecter une adresse particulière à une installation par le seul contrôleur (50),
- enregistrer dans une mémoire de liaison (59), une information de liaison entre l'adresse particulière de l'installation et un code identificateur de groupe (66, 68, 70) correspondant au groupe contenant l'installation.

3. Procédé selon la revendication 2, caractérisé en ce qu'il comprend les étapes consistant à :
- émettre à partir de chaque installation vers le seul contrôleur (50), seulement un code identificateur de groupe au moment de l'installation.

4. Procédé selon l'une quelconque des revendications 1 à 3, caractérisé en ce qu'il comprend les étapes consistant à :
- commander un capteur (S_{A}, S_{B}) par le seul contrôleur (50),
- affecter ce capteur à un groupe d'installations,
- modifier les instructions (56, 57, 58) d'un groupe d'installations correspondant au capteur conformément aux informations contenues dans une trame de données transmise par le capteur au seul contrôleur.

5. Procédé selon l'une quelconque des revendications 1 à 4 précédentes, dans lequel chaque trame de données contient un code d'identificateur de type de trame.

6. Procédé selon l'une quelconque des revendications 1 à 5, caractérisé en ce qu'il comprend l'étape consistant à :
- enregistrer (59), dans le seul contrôleur, au moment de son installation, des informations de liaison entre une installation nouvellement installée et un identificateur de groupe.

7. Procédé selon l'une quelconque des revendications 1 à 6, caractérisé en ce qu'il comprend l'étape consistant à :
- enregistrer (59), dans le contrôleur, des informations de liaison entre une installation nouvellement installée et un identificateur de groupe, ces informations étant transmises à l'installation nouvellement installée par le seul contrôleur au moment de l'installation.

8. Procédé selon l'une quelconque des revendications 1 à 7, caractérisé en ce que :
- les trames de données sont transmises au moyen (52) d'un signal électrique superposé sur une tension de réseau électrique.

9. Procédé selon l'une quelconque des revendications 1 à 8, caractérisé en ce que :
- les trames des données sont envoyées au seul contrôleur (50) par émission radio.

10. Procédé selon l'une quelconque des revendications 1 à 9, caractérisé en ce que :
- les trames de données sont envoyées au seul contrôleur (50) par émission infrarouge.

## Patentansprüche

1. Verfahren zur Steuerung einer Vielzahl elektrischer Anlagen (A1 bis A3, B1 bis B4) des qleichen Typs oder verschiedener Typen, die an eine gemeinsame Datenstrecke (52) angeschlossen sind, wobei jede Anlage ein Mittel aufweist, um ein von einem einzigen Steuerorgan (50) auf dieser ihnen gemeinsamen Datenstrecke übertragenes Signal zu decodieren, wobei dieses Verfahren folgende Schritte aufweist:
- ausgehend von jeder gesteuerten Anlage eine Folge von Kenndaten zum einzigen Steuerorgan (50) zu senden, die einen Kennzeichnungscode des Anlagentyps (4) enthält,
- die Folge von Kenndaten im Steuerorgan (50) zu empfangen,
- die Folge von Kenndaten im Steuerorgan (50) zu decodieren,
- die Anlage (A1 bis A3, B1 bis B4) mittels des einzigen Steuerorgans gemäß einer Gruppe von Befehlen (56, 57, 58) zu steuern, die in einem Befehlsspeicher (55) des einzigen Steuerorgans (50) gespeichert sind und Anlagentyp entsprechen, der vom Kennzeichnungscode des Anlagentyps (4) gekennzeichnet wird,
dadurch gekennzeichnet, daß das Verfahren außerdem folgende Schritte aufweist:
- die elektrischen Anlagen des gleichen Typs in Gruppen (A, B, C, D) zusammenzufassen,
- einen Gruppenkennzeichnungscode (b₂₄ bis b₂₇) innerhalb einer Datenfolge zwischen jeder Anlage und dem einzigen Steuerorgan (50) zu senden,
- den in dem einzigen Steuerorgan (50) empfangenen Gruppenkennzeichnungscode (53, 54) zu decodieren,
- die Anlage durch das einzige Steuerorgan (50) gemäß einer Untereinheit von Befehlen (56, 57, 58) zu steuern, die der Gruppe (A, B, C, D) von Anlagen entspricht, die im Befehlsspeicher (55) des einzigen Steuerorgans (50) gespeichert sind.

2. Verfahren nach Anspruch 1, dadurch gekennzeichnet, daß es weiter die folgenden Schritte aufweist:
- durch das einzige Steuerorgan (50) einer Anlage eine eigene Adresse zuzuordnen,
- in einem Verbindungsspeicher (59) eine Verbindungsinformation zwischen der eigenen Adresse der Anlage und einem Gruppenkennzeichnungscode (66, 68, 70) zu speichern, der der die Anlage enthaltenden Gruppe entspricht.

3. Verfahren nach Anspruch 2, dadurch gekennzeichnet, daß es die folgenden Schritte aufweist:
- zum Zeitpunkt der Installierung ausgehend von jeder Anlage nur einen Gruppenkennzeichnungscode zum einzigen Steuerorgan (50) zu senden.

4. Verfahren nach einem beliebigen der Ansprüche 1 bis 3, dadurch gekennzeichnet, daß es die folgenden Schritte aufweist:
- einen Meßfühler (S_{A}, S_{B}) durch das einzige Steuerorgan (50) zu steuern,
- diesen Meßfühler einer Gruppe von Anlagen zuzuordnen,
- die Befehle (56, 57, 58) einer dem Meßfühler entsprechenden Gruppe von Anlagen gemäß den in einer vom Meßfühler an das einzige Steuerorgan übertragenen Datenfolge enthaltenen Informationen zu ändern.

5. Verfahren nach einem beliebigen der vorhergehenden Ansprüche 1 bis 4, bei dem jede Datenfolge einen Kennzeichnungscode für den Typ der Datenfolge enthält.

6. Verfahren nach einem beliebigen der Ansprüche 1 bis 5, dadurch gekennzeichnet, daß es den folgenden Schritt aufweist:
- zum Zeitpunkt der Installierung Verbindungsinformationen zwischen einer neu installierten Anlage und einer Gruppenkennzeichnung in das einzige Steuerorgan einzuspeichern (59).

7. Verfahren nach einem beliebigen der Ansprüche 1 bis 6, dadurch gekennzeichnet, daß es den folgenden Schritt aufweist:
- Verbindungsinformationen zwischen einer neu installierten Anlage und einer Gruppenkennzeichnung in das Steuerorgan zu speichern (59), wobei diese Informationen zum Zeitpunkt der Installation vom einzigen Steuerorgan zur neu installierten Anlage übertragen werden.

8. Verfahren nach einem beliebigen der Ansprüche 1 bis 7, dadurch gekennzeichnet, daß
- die Datenfolgen mittels eines eine Netzspannung überlagernden elektrischen Signals übertragen werden (52).

9. Verfahren nach einem beliebigen der Ansprüche 1 bis 8, dadurch gekennzeichnet, daß
- die Datenfolgen durch Funkübertragung an das einzige Steuerorgan (50) gesendet werden.

10. Verfahren nach einem beliebigen der Ansprüche 1 bis 9, dadurch gekennzeichnet, daß
- die Datenfolgen durch Infrarotübertragung an das einzige Steuerorgan (50) gesendet werden.

## Claims

1. Method for controlling a plurality of electrical installations (A1 to A3, B1 to B4) of one or more types connected to a common data path (52), each having a means for decoding a signal transmitted to them on this common data path by means of a single controller (50), comprising the steps consisting of:
- sending, from each controlled installation to the single controller (50), an identification data frame, containing a code identifying the installation type (4),
- receiving the identification data frame in the controller (50),
- decoding the identification data frame in the controller (50), and
- controlling the installation (A1 to A3, B1 to B4) by means of the single controller in accordance with a set of instructions (56, 57, 58) stored in an instruction memory (55) of the single controller (50) and corresponding to the type of installation identified by the code identifying the installation type (4),
characterised in that the method also comprises the steps consisting of:
- organising the electrical installations of the same type in groups (A, B, C, D),
- sending a group identifier code (b₂₄ to b₂₇) within a data frame between each installation and the single controller (50),
- decoding (53, 54) the group identifier code received in the single controller (50),
- controlling the installation by means of the single controller (50) in accordance with a subset of instructions (56, 57, 58) corresponding to the group (A, B, C, D) of installations stored in the instruction memory (55) of the single controller (50).

2. Method according to Claim 1, characterised in that it also comprises the steps consisting of:
- allocating a particular address to an installation by means of the single controller (50),
- recording, in a connecting memory (59), information about connection between the particular address of the installation and a group identifier code (66, 68, 70) corresponding to the group containing the installation.

3. Method according to Claim 2, characterised in that it comprises the steps consisting of:
- sending, from each installation to the single controller (50), solely a group identifier code at the moment of installation.

4. Method according to any one of Claims 1 to 3, characterised in that it comprises the steps consisting of:
- controlling a sensor (S_{A}, S_{B}) by means of the single controller (50),
- allocating this sensor to a group of installations,
- modifying the instructions (56, 37, 58) of a group of installations corresponding to the sensor in accordance with the information contained in a data frame transmitted by the sensor to the single controller.

5. Method according to any one of the preceding Claims 1 to 4, in which each data frame contains a code identifying the type of frame.

6. Method according to any one of Claims 1 to 5, characterised in that it comprises the step consisting of:
- recording (59), in the single controller, at the time of its installation, information about connection between a newly installed installation and a group identifier.

7. Method according to any one of Claims 1 to 6, characterised in that it comprises the step consisting of:
- recording (59), in the controller, information about connection between a newly installed installation and a group identifier, this information being transmitted to the newly installed installation by the single controller at the time of installation.

8. Method according to any one of Claims 1 to 7, characterised in that:
- the data frames are transmitted by means (52) of an electrical signal superimposed on an electrical network voltage.

9. Method according to any one of Claims 1 to 8, characterised in that:
- the data frames are sent to the single controller (50) by radio transmission.

10. Method according to any one of Claims 1 to 9, characterised in that:
- the data frames are sent to the single controller (50) by infrared transmission.
